# EUROPEAN PATENT APPLICATION

(11) **EP 4 687 370 A1**
(43) Date of publication of application: **04.02.2026**
(21) Application number: 24192484.4
(22) Date of filing: 02.08.2024
(51) Int. Cl.: H05B 1/02, B60H 1/22, F24F 11/30, F24F 140/00

(54) **HEATING DEVICE AND HEATING ARRANGEMENT AND METHOD**

(71) Applicant: MAHLE International GmbH, 70376 Stuttgart (DE)
(72) Inventor: FRIAS, Anthony, 46484 San Antonio de Benageber (ES); WANKE, Robin, 46530 Puzol (ES)
(74) Representative: BRP Renaud & Partner mbB Rechtsanwälte Patentanwälte Steuerberater

(57) **Abstract**

The invention relates to an electrical heating device (1). The heating device (1) comprises at least one electrically energizable PTC heating element (2) and a supply line (3) which is electrically connected to the PTC heating element (2) and can be electrically connected to an energy source (21) via an electrical connection section (4) in order to supply the PTC heating element (2) with electrical energy. Furthermore, the heating device (1) comprises a controllable switching element (5) arranged between the connection section (4) and the PTC heating element (2) in the supply line (3). The switching element (5) can be switched between an open state, in which the switching element interrupts the electrical connection between the connection section (4) and the PTC heating element (2), and a closed state, in which this electrical interruption is canceled. Furthermore, the heating device (1) comprises an electrical sensor device (6) for determining at least one operating parameter of the heating device (1). The sensor device (6) is electrically connected to the switching element (5) for switching the switching element (5) between the open and the closed state as a function of an instantaneous value of the operating parameter.

## Description

The present invention relates to an electrical heating device and a heating arrangement with such a heating device. The invention also relates to a method for operating the heating device or the heating arrangement.

Electrical heating devices, in particular for air conditioning systems, often have an electrical heating resistor in the form of a PTC heating element, the electrical resistance of which increases with increasing temperature. A heating resistor with such a temperature dependency is also referred to as a "PTC heating resistor". If the PTC heating element is connected to an electrical power source and electrically energized in this way, so that it heats up and consequently emits heat, the PTC property of the heating element leads to a kind of self-regulation of the heating power provided by the heating element.

However, the fact that the temperature of the heating element is still comparatively low at the start of the heating process often proves to be problematic. As a result, an impermissibly high electrical current can be generated by the PTC heating element due to the low electrical resistance associated with the low temperature. Conventional PTC heating devices are therefore often equipped with an adjustable electronic switch that can cut off the electrical current supply to the heating element. The control of such a switch as a function of various operating parameters is usually carried out with the aid of a microcontroller in such conventional heating devices.

However, such a microcontroller has a comparatively complex structure and is therefore also comparatively expensive, which can have a detrimental effect on the manufacturing costs of the heating device.

It is therefore an object of the present invention to create an improved embodiment for a PTC heating device described at the beginning, in which the aforementioned disadvantage is at least partially eliminated.

This object is solved by the subject matter of the independent patent claims. Preferred embodiments are the subject of the dependent claims.

Accordingly, the basic idea of the invention is to interrupt the electrical energization of a PTC heating element of a PTC heating device by means of an electronic switching element which is controlled directly by a sensor device, i.e. without the use of a microcontroller or other digital component. The sensor device monitors or detects a certain operating parameter of the heating device, for example an instantaneous electrical supply current to the PTC heating element or an instantaneous temperature of the PTC heating element or an heating device voltage, and generates an analog electrical output signal which reflects an instantaneous value of said operating parameter.

Essentially, in the heating device according to the invention presented here, the sensor device is not connected electrically to the switching element digitally, but analog, in particular by means of an analog electrical circuit or an analog electrical switching circuit with analog electrical components - in particular an electrical impedance, a capacitance, an inductance, a diode or a semiconductor switch. This connection is implemented in such a way that the electrical output signal generated by the sensor device and representing the instantaneous value of an operating parameter of the heating device is an analog output signal, which can be further processed by means of the analog switching or the analog circuit in such a way that a control signal for the switching element is generated, which causes a switchover between the open and closed state of the switching element. In detail, an electrical heating device according to the invention comprises at least one electrically energizable PTC heating element and a supply line electrically connected to the PTC heating element. The PTC heating element can comprise a PTC heating resistor whose electrical resistance increases with increasing temperature. The electrical supply line can be electrically connected to an energy source via an electrical connection section in order to supply the PTC heating element with electrical energy. Furthermore, the heating device comprises a controllable, preferably electrical or electronic, switching element arranged between the connection section and the PTC heating element in the supply line. The switching element can be switched between an open state, in which the switching element interrupts the electrical connection between the connection section and the PTC heating element, and a closed state, in which this electrical interruption is removed. In other words, in the closed state, the connection section is electrically connected to the heating element via the switching element, whereas in the open state, the connection section is electrically disconnected from the heating element by means of the switching element.

Furthermore, the heating device comprises an electrical sensor device for determining at least one operating parameter of the heating device. According to the invention, the sensor device is electrically connected to the switching element for switching the switching element between the open and the closed state as a function of an instantaneous value of the operating parameter, i.e. for controlling the switching element.

In a preferred embodiment of the heating device according to the invention, the sensor device for switching the switching element between the open and closed state is connected to the switching element via an analog circuit. During operation of the heating device, the sensor device generates an analog output signal which can be transmitted to the switching element as a control signal by means of the switching circuit. The switching circuit contains only analog electrical and electronic components. Such components can be, for example, a diode, a semiconductor switch, an electrical impedance, an inductance, a capacitance or the like.

In a particularly preferred embodiment, a digital circuit with digital components and in particular a microcontroller is expressly excluded.

In another advantageous variant, which is an alternative to the advantageous embodiment described above, the sensor device for switching the switching element between the open and closed state can be electrically connected directly to the switching element via a control line, in particular a low-resistance control line, i.e. an intermediate circuit. In this variant, the sensor device also generates an analog output signal during operation of the heating device, which in this variant, however, is transmitted to the switching element in unchanged form via the control line and used by it as a control signal. Since this variant also dispenses with the provision of analog components, this design variant has an extremely simple technical structure and is therefore associated with particularly high cost savings. Here, "low-resistance electrical control line" means that a signal output of the sensor device always has the same electrical potential as a signal input of the switching element.

The electrical connection between the sensor device and the switching element can therefore be made without a microcontroller. This simplifies the technical design of the heating device and thus leads to the desired cost reduction compared to a conventional heating device with such a microcontroller.

According to an advantageous further development, the heating device can have an additional PTC heating element, which is connected to the connection section via an additional electrical supply line. When the electrical connection section of the heating device is connected to an electrical energy source, the additional PTC heating element is thus always electrically energized and supplied with electrical energy from the energy source, regardless of the state of the switching element, so that it continuously generates heat and emits it to its surroundings.

According to another advantageous further development, at least one operating parameter can be an electrical supply current through the supply line and the sensor device can comprise an electrical current sensor for determining this supply current. This enables a configuration in which the switching element is switched to the open state and the heating element is consequently deactivated if the electrical current to the heating element measured by the electrical current sensor exceeds a predetermined threshold value. In this way, an impermissibly high electric current to or through the heating element is prevented.

According to another advantageous further development, at least one operating parameter can be a temperature of the PTC heating element and the sensor device can therefore comprise a temperature sensor for determining this temperature. In one variant, the temperature sensor can be designed to determine the temperature of another component of the heating device or the temperature at a specific position in the heating device. By means of this further development, a configuration is realized in which the switching element is switched to the open state and the heating element is consequently deactivated if the temperature determined by the temperature sensor exceeds a predetermined threshold value. In this way, an impermissibly high temperature and the associated overheating of the heating element and thus of the entire heating device can be prevented.

According to another advantageous further development, the operating parameter can be an electrical voltage applied to the connection section of the supply line and the sensor device can comprise an electrical voltage sensor for determining this electrical voltage. Since the electrical current provided at the connection section depends on the electrical output voltage of the energy source connected there or typically corresponds to it, this further development can be used to prevent an excessively high electrical current from being conducted through the heating element if the electrical output voltage is too high.

In a preferred further embodiment, the electrical switching element is a semiconductor switch, in particular a power transistor, with a control input for controlling the semiconductor switch. Such a semiconductor switch is also suitable for transmitting high electrical currents, as occur in an electrical heating device during operation, and at the same time can be electrically connected to the sensor device or the analog circuit between the sensor device and the switching element in a comparatively simple manner. In this embodiment, the sensor device for switching the semiconductor switch is therefore electrically connected to the control input.

The power transistor can particularly preferably be a bipolar transistor with an insulated gate electrode (IGBT). Such a bipolar transistor can be controlled in a particularly simple way and thus switched between the open and closed state. This also simplifies the structure of the analog circuit or, in extreme cases, it can be dispensed with completely.

The invention also relates to a heating arrangement, in particular for an air conditioning system. The heating arrangement according to the invention comprises a heating device according to the invention presented above, so that the advantages of the heating device according to the invention explained above are transferred to the heating arrangement according to the invention. The heating arrangement comprises an energy supply unit, in particular a battery, electrically connected to the connection section of the supply line of the heating device for supplying the PTC heating element of the heating device with electrical energy. The battery or energy source is particularly preferably a high-voltage battery, which provides a high electrical voltage as the output voltage.

Finally, the invention relates to a method for operating a heating device according to the invention as described above or a heating arrangement according to the invention as described above. The advantages of the heating device according to the invention explained above therefore also apply to the method according to the invention. According to the method, the switching element is switched to its open state by means of the sensor device as soon as a value of the operating parameter determined by means of the sensor device exceeds a (first) threshold value. Furthermore, in the method according to the invention, the switching element is switched to its closed state by means of the sensor device as soon as a value of the operating parameter determined by means of the sensor device falls below a (second) threshold value.

It is particularly preferable for the first threshold value to be greater than the second threshold value. As a result, a hysteresis-like switching behavior of the switching element can be achieved.

Further important features and advantages of the invention are apparent from the sub-claims, from the drawings and from the associated description of the figures with reference to the drawings.

It is understood that the features mentioned above and those to be explained below can be used not only in the combination indicated in each case, but also in other combinations or on their own, without going beyond the scope of the present invention.

Preferred embodiments of the invention are shown in the drawings and are explained in more detail in the following description, with identical reference signs referring to identical or similar or functionally identical components.

It shows, schematically in each case:
- Fig. 1: is a schematic representation, similar to a circuit diagram, of the structure of a heating arrangement according to the invention with a heating element according to the invention,
- Fig. 2: is an exemplary flow diagram illustrating the process according to the invention.

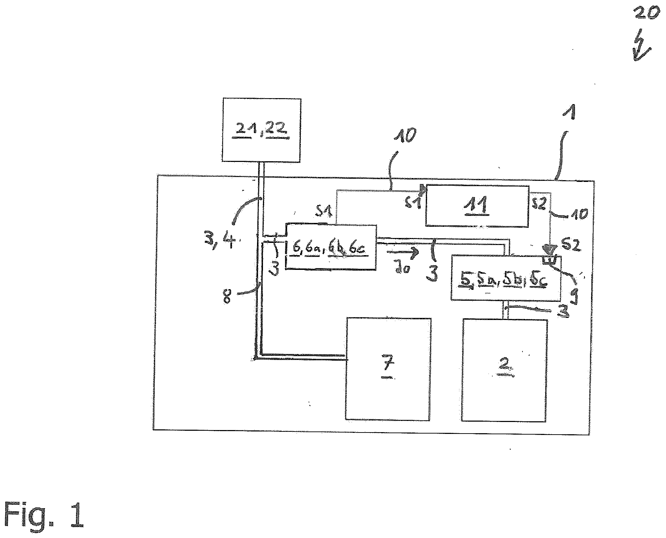

Figure 1 shows schematically and in a circuit diagram-like representation the structure of a heating arrangement 20 according to the invention, in particular for an air conditioning system. The heating arrangement 20 comprises a heating device 1 according to the invention. The electrical heating device 1 in turn has an electrically energizable PTC heating element 2 and an electrical supply line 3 electrically connected to the PTC heating element 2. To supply the PTC heating element 2 with electrical energy, the supply line 3 is electrically connected with an electrical connection section 4 to an energy source 21 of the heating arrangement 20 - in the form of a battery 22, for example.

Furthermore, the heating device 1 comprises a controllable switching element 5 arranged between the connection section 4 and the PTC heating element 2 in the supply line 3. The switching element 5 can be switched between an open state, in which the switching element interrupts the electrical connection between the connection section 4 and the PTC heating element 2, and a closed state, in which this electrical interruption is removed. In the closed state, the connection section is therefore electrically connected to the PTC heating element 2 via the switching element 5. In the open state, however, the connection section 4 is electrically disconnected from the heating element 2 by means of the switching element 5. Consequently, the PTC heating element 2 can be supplied with electrical energy from the energy source 21 when the switching element 5 is closed, so that it generates and emits electrical heat. When the switching element 5 is open, the electrical power supply and thus the supply of electrical energy to the PTC heating element 2 is interrupted, so that the PTC heating element 2 cannot generate and emit any heat in this state.

As can be seen in Figure 1, the heating device 1 also comprises an electrical sensor device 6 for determining an operating parameter of the heating device 1. The switching element 5 can be controlled by the sensor device 6 as a function of an instantaneous value of the operating parameter. For this purpose, i.e. to switch the switching element 5 between the open and closed state, the sensor device 6 is electrically connected to the switching element 5. In the example, the sensor device 6 is connected to the switching element 5 via an analog switching circuit 11 to switch the switching element 5 between the open and closed states. As shown, the switching circuit 11 can be arranged in a control line 10, which electrically connects the sensor device 6 to the switching element 5.

During operation of the heating device 1, the sensor device 6 generates an analog output signal S1, which is transmitted to the switching element 5 as control signal S2 by means of the switching circuit 11. The output signal S1 can be transmitted to the switching element 5 using an analog circuit 11 that contains analog electrical and electronic components. Such components can be, for example, a diode, a semiconductor switch, an electrical impedance, an inductance or a capacitance.

In a simplified variant, the analog circuit 11 can also be omitted. In this case, the sensor device 6 can be directly electrically connected to the switching element 5 via the low-resistance control line 10. Even in this simplified variant, the sensor device 6 generates an analog output signal S1 during operation of the heating device 1 and during operation, which in this variant is transmitted to the switching element 5 in unchanged form as control signal S2 via the control line 10.

In the example, the electrical switching element 5 is a semiconductor switch 5a in the form of a power transistor 5b, which has a control input 9 for controlling the semiconductor switch 5a or for switching between the open and closed state. The power transistor 5b can usefully be a bipolar transistor 5c with an insulated gate electrode (IGBT). To switch the semiconductor switch 5a, the sensor device 6 is electrically connected to the control input 9.

As illustrated in Figure 1, the heating device 1 can also have an additional PTC heating element 7, which is connected to the connection section 4 of the supply line 3 via an additional electrical supply line 8. The additional supply line 8 differs from the supply line 3 in that no switching element 5 is arranged in the additional supply line 8. When the connection section 4 is connected to the energy source 21, the additional PTC heating element 7 is therefore always electrically energized and supplied with electrical energy from the energy source 21, regardless of the state of the switching element 5, so that it continuously generates and emits heat.

According to a first alternative variant of the heating device 1, the operating parameter to be monitored can be an electrical supply current I0 through the supply line 3. In this variant, sensor device 6 comprises an electrical current sensor 6a or is such an electrical current sensor 6a for determining this electrical supply current 10.

According to a second alternative variant of the heating device 1, said operating parameter can be the temperature of the PTC heating element 2 and the sensor device 6 comprises a temperature sensor 6b for determining this temperature.

According to a second alternative variant of the heating device 1, the operating parameter may be an electrical voltage applied to the connection section 4 of the supply line 3 and the sensor device 6 may comprise an electrical voltage sensor 6c for determining this electrical voltage

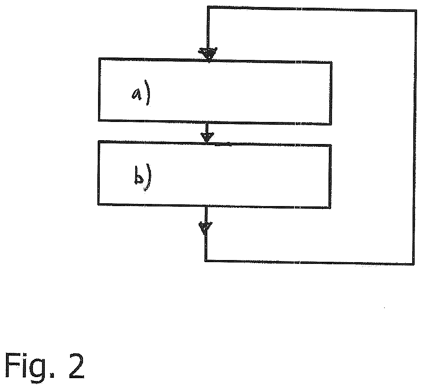

In the following, the method according to the invention for operating the heating device 1 or the heating arrangement 20 of figure 1 is explained by way of example with reference to figure 2.

The monitored operating parameter is the temperature measured by the sensor device 6. The initial state of the example is the switching element 5 in the closed state. The heating element 2 is thus supplied with electrical energy from the energy source 21 and electrically energized so that it generates and emits heat. This increases the temperature of the heating element 2 and consequently also of the heating device 1.

In the method according to the invention, the switching element 5 is now switched to the open state by the sensor device 6 in a first measure a) as soon as a value of the temperature of the relevant operating parameter determined by the sensor device 6 exceeds a first threshold value. This deactivates the heating element 2 so that it does not emit any heat. Consequently, the temperature of the heating element 2 will decrease again.

In a second measure b) following the first measure a), the switching element 5 is switched to the closed state by the sensor device 6 as soon as a temperature value determined by the sensor device 6 falls below a second threshold value.

In the example scenario, the first threshold value is greater than the second threshold value. As a result, a type of hysteresis is realized with regard to the switching of the switching element 5 between the open and closed state. The heating element 2 is therefore activated as long as the first threshold value has not yet been exceeded. The heating element is only reactivated when the temperature falls below the second threshold value. This ensures that the heating device 1 or the heating element 2 is only operated in a specific temperature interval.

In addition, the use of two different threshold values prevents the switching element from constantly switching between the open and closed states in immediate succession

The additional heating element 7 (cf. figure 1), if present, which cannot be deactivated by the switching element 5, ensures that a certain minimum amount of heat is generated by the heating device 1 in any case.

As can be seen from Figure 2, after carrying out measure b), measure a) can be continued again, i.e. measures a) and b) can be repeated and in particular iterated twice or several times.

## Claims

1. Electrical heating device (1), in particular for an air-conditioning system of a motor vehicle,
- with at least one electrically energizable PTC heating element (2),
- with an electrical supply line (3) which is electrically connected to the PTC heating element (2) and which can be electrically connected to an energy source (21) by means of an electrical connection section (4) in order to supply the PTC heating element (2) with electrical energy,
- with a controllable switching element (5), which is arranged between the connection section (4) and the PTC heating element (2) in the supply line (3) and can be switched between an open state, in which the switching element (5) interrupts the electrical connection between the connection section (4) and the PTC heating element (2), and a closed state, in which this interruption is canceled,
- with an electrical sensor device (6) for determining at least one operating parameter of the heating device (1), which is electrically connected to the switching element (5) for switching the switching element (5) between the open and the closed state as a function of an instantaneous value of the operating parameter.

2. Heating device according to claim 1,
**characterized in that**
the sensor device (6) for switching the switching element (5) between the open and the closed state is connected to the switching element (5) via an analog electrical/electronic switching circuit (11) and generates an analog electrical output signal (S1) during operation, which is transmitted to the switching element (5) as a control signal (S2) by means of the switching circuit (11).

3. Heating device according to claim 1,
**characterized in that**
the sensor device (6) for switching the switching element (5) between the open and the closed state is electrically connected to the switching element (5) via a control line (10), in particular a low-resistance control line, and generates an analog output signal (S1) during operation, which can be transmitted via the control line (10) in unchanged form as a control signal (S2) to the switching element (5).

4. Heating device according to one of the preceding claims,
**characterized in that**
the heating device (1) has an additional PTC heating element (7), which is connected to the connection section (4) via an additional electrical supply line (8) in which preferably no switching element (5) is arranged.

5. Heating device according to one of the preceding claims,
**characterized in that**
the operating parameter is an electrical supply current (I0) through the supply line (3) and the sensor device (6) comprises an electrical current sensor (6a) for determining this supply current.

6. Heating device according to one of the preceding claims,
**characterized in that**
the operating parameter is a temperature of the PTC heating element (2) and the sensor device (6) comprises a temperature sensor (6b) for determining this temperature.

7. Heating device according to one of the preceding claims,
**characterized in that**
the operating parameter is an electrical voltage present at the connection section (4) of the supply line (3), and the sensor device (6) comprises an electrical voltage sensor (6c) for determining this electrical voltage.

8. Heating device according to one of the preceding claims,
**characterized in that**
- the electrical switching element (5) is a semiconductor switch (5a), in particular a power transistor (5b), with a control input (9) for controlling the semiconductor switch (5a),
- the sensor device (6) for switching the semiconductor switch (5a) is electrically connected to the control input (9).

9. Heating device according to claim 8,
**characterized in that**
the semiconductor switch (5a) or power transistor (5b) is a bipolar transistor with insulated gate electrode (IGBT) (5c).

10. Heating arrangement (20), in particular for an air-conditioning system,
- with a heating device (1) according to one of the preceding claims,
- with an energy supply unit (21), in particular a battery (22), electrically connected to the connection section (4) of the supply line (3) of the heating device (1), for supplying the PTC heating element (2) of the heating device (1) with electrical energy.

11. Method for operating a heating device (1) according to one of claims 1 to 9 or a heating arrangement (20) according to claim 10,
- according to which the switching element (5) is switched over to the open state by the sensor device (6) as soon as a value of the operating parameter determined by means of the sensor device (6) exceeds a (first) threshold value,
- according to which the switching element (5) is switched over to the closed state by the sensor device (6) as soon as a value of the operating parameter determined by means of the sensor device (6) falls below a (second) threshold value.

12. Method according to claim 11,
**characterized in that**
the first threshold value is greater than the second threshold value.
